# EUROPÄISCHE PATENTANMELDUNG

(11) **EP 1 622 346 A1**
(43) Veröffentlichungstag der Anmeldung: **01.02.2006**
(21) Anmeldenummer: 05014737.0
(22) Anmeldetag: 07.07.2005
(51) Int. Cl.: H04M 1/725

(54) **RFID-Reader kompatibles Mobiltelefon: RFID-vermittelter Datentransfer auf Mobiltelefon und konsekutiver mobile/ubiquitous Commerce**

(30) Priorität: 31.07.2004 DE 102004037241
(71) Anmelder: Deutsche Telekom AG, 53113 Bonn (DE)
(72) Erfinder: Neumann, Markus, Dr., 65824 Schwalbach (DE)

(57) **Zusammenfassung**

Die Erfindung betrifft ein Verfahren zur Bereitstellung von RFID-Informationen auf einem mobilen Kommunikationsgerät, das mindestens eine Netzwerkschnittstelle aufweist, wobei das mobile Kommunikationsgerät weiterhin eine RFID-Lesevorrichtung aufweist, wobei anhand der RFID-Informationen durch eine benutzerfreundliche Menüführung weitere Informationen über die Netzwerkschnittstelle angefordert werden, wobei die Menüführung dynamisch durch den Inhalt der RFID-Informationen vorgegeben wird.

## Beschreibung

Die Erfindung betrifft ein Verfahren zur Bereitstellung von RFID-interpretierbaren Informationen auf Informationsträgern, insbesondere Werbeträgern, sowie entsprechende mobile Kommunikationsgeräte, die RFID-Informationen lesen und interpretieren können.

In Zukunft wird der Handel so genannte RFID-Labels (smart labels) in und an Waren integrieren. Diese smart labels speichern und übermitteln Daten. Diese Labels werden unterteilt in aktive und passive Daten-Überträger (aktive und passive Transponder).

Aktive Labels werden aus einer Energiequelle (z. B. Batterie) gespeist und haben eine größere Reichweite des Datentransfers. Diese Labels speichern produktbezogene Daten (Write-Funktion) und diese Daten werden von einem Readergerät ausgelesen (Read-Funktion).

Hersteller werden in Zukunft Mehrwert-Informationen, wie Wartungsangaben, technische Details oder Finanzierungspläne auf solchen Labels speichern und mit hochpreisigen Produktgruppen an den Handel ausliefern.

Aus der DE 197 47 583 ist ein Kommunikationssystem bekannt für ein Verknüpfen von einer Vielzahl markierter Objekte mit Informationsdiensten, die in einem Netzwerk gespeichert sind. In einer besonderen Ausführungsform erlaubt das System durch das Einlesen einer Markierung einen Zugriff auf Informationen im Internet, wobei die Markierung durch einen zentralen Server in eine Internetadresse umgewandelt wird.

Aus der DE 100 00 664 ist ein Hilfsgerät bekannt, das den Zugriff auf Informationen im Internet erleichtert, wobei das Hilfsgerät von herkömmlichen Medien, wie Pappe, Papier oder anderen Dingen eine Markierung liest, in der eine URL-Adresse codiert ist. Nach dem Lesen dieser Adressen werden die benötigten Informationen aus dem Internet geladen, um sie dann auf einem weiteren Gerät anzuzeigen.

Aus der DE 197 33 689 ist eine Vorrichtung bekannt, die durch Lesen eines Strichcodes die Dateiadresse erkennt und einen Zugriff auf die so gespeicherte Datei ermöglicht.

Aufgabe der vorliegenden Erfindung ist es, ein Verfahren oder eine Vorrichtung bereitzustellen, die eine einfache Kontaktaufnahme und Information des Konsumenten über den Artikel erlaubt.

Gelöst wird diese Aufgabe durch ein Verfahren und eine Vorrichtung mit den Merkmalen der unabhängigen Ansprüche.

So ist kundenseitig folgendes Szenario vorstellbar: mobile Endgeräte, zum Beispiel Mobiltelefone, mit integrierten RFID-Readern sind als Scanner in Warenhäusern, zum Beispiel Baumärkten, einsetzbar und lesen die produktbezogenen Daten (item-level data).

Die Daten können später über Schnittstellen auf Handydisplays und /oder Home-PCs übertragen und gespeichert werden.

Der Kunde hat nun die Möglichkeit der selektiven Bearbeitung der Daten, d. h. er kann sich zu bestimmten Produkteigenschaften via SMS oder Telefon mit einem Customer Service Center in Verbindung setzen und kommerzielle Zusatzdienstleistungen abrufen (z. B. Beratung zu Wartung und Bedienungsanleitung) und/oder finanzielle Transaktionen auslösen (z. B. Kauf, Leasing). Der Menü-Aufbau des mobilen Endgerätes richtet sich nach den vorhandenen Informationen. Ist z. B. nur die Seriennummer vorhanden und keinerlei weitergehende Informationen, so sind auf der Basis der Seriennummer die Daten von einem TrustCenter herunterzuladen, die eine weitergehende Menüführung erlauben. Ansonsten können die Informationen auch direkt im RFID-Label vorhanden sein, z. B. in Form von XML oder HTML, oder Java, durch das ein entsprechendes Menü bestimmt wird.

In einer sehr einfachen Ausgestaltung wird lediglich die URL (Uniform Resource Locator (URL) bezeichnet die genormte Adressierung für Multimedia-Dokumente im WWW) übertragen, wie sie z. B. bei einem Internet-Browser verwendet wird, um eine neue Seite zu bestimmen. In diesem Falle werden alle Daten aus dem Internet bezogen, die für den Menüaufbau notwendig sind, um die weiteren Aktionen anzustoßen.

Alternativ dazu besteht die Möglichkeit, entsprechende Fax- bzw. Telefonnummern zu senden, die vorzugsweise in diesen interpretierbaren Informationen codiert sind, die dann per Knopfdruck aufgerufen werden können.

In einer weitergehenden Ausführungsform werden Web-Browser-interpretierbare Informationen in Form von xhtml, Html, XML, Java, Javascript übertragen, die durch das Anzeigegerät interpretiert werden und ggf. dargestellt werden. Hierfür ist es notwendig, dass das Anzeigegerät die entsprechenden Standards unterstützt und entsprechende Interpreter verwendet. Weitere Standards sind ebenfalls denkbar. Sollten ganze Programmfragmente, wie sie in Java-Script auftreten, durch eine optische Markierung übertragen werden, so ist unbedingt sicherzustellen, dass keinerlei Fehler bei der Erkennung und bei der Übertragung auftreten.

Ein weiterer Bestandteil der Erfindung ist das RFID-Label mit einem Bereich, in dem Menüinformationen abgelegt sind. Wie bereits oben ausgeführt wurde, handelt es sich hierbei vorzugsweise um Informationen in Form von URL, WAP, XML, html, xhtml, Java oder Java-Script.

Werbeseiten können mit entsprechenden Chips ausgerüstet werden, die dem Konsumenten sofort weitergehende Informationen über die ausgestellten Waren auf das Handy spielen, sodass er über eingespielte Telefonnummern sofort per Knopfdruck mehr Informationen anfordern oder das dargestellte Produkt bestellen kann.

Durch eine Anwendung im Schaufenster kann sich der Konsument weitergehende Informationen über die ausgestellten Waren auf das Handy senden lassen, um dann über eingespielte Telefonnummern oder eine URL sofort per Knopfdruck mehr Informationen anfordern oder das dargestellte Produkt bestellen zu können und gleichzeitig bezahlten zu bekommen. Das gilt sowohl für Schaufenster von Geschäften als auch für Vitrinen (z. B. in Fußgängerzonen oder Flughäfen), die nicht unmittelbar mit einem Geschäft verbunden sind. Zur Anwendung kommen die bereits beschriebenen Technologien, wobei die Sendeleistung aufgrund der geringeren Entfernungen geringer sind. Letzteres hat den Vorteil, dass der Konsument auch während des Gebrauches jederzeit zum Hersteller Kontakt aufnehmen kann (Hotline, Bedienungsanleitung, Nach- oder Ergänzungskauf).
All diese Informationen werden durch den RFID-Träger in Form von interpretierbaren Informationen bereitgestellt.

Ein weiterer Bestandteil der Erfindung ist ein mobiles und vorzugsweise handgroßes Anzeigegerät mit einem Display, mit einem Speicherbereich, mit einer Bearbeitungseinheit, die vorzugsweise als Mikroprozessor ausgebildet ist, mit einem Funkmodul für einen Funkzugang zum Internet und mit einer Software, die Menü-Informationen darstellen kann. Weiterhin sind Bestandteile dieses Anzeigegeräts Mittel, die Web-Browser-interpretierbare Informationen, insbesondere WAP, URL, XML, html, xhtml, Java oder Java-Script von Werbeträgern empfangen können. In der Regel handelt es sich hierbei um ein Empfangsmodul, das als Funk-Empfangsmodul oder als Infrarot-Empfangsmodul ausgestaltet ist. Die durch dieses Modul gesammelten Informationen werden an einen Interpreter weitergereicht, das Menü aufbaut, um dann ggfs. mit Interaktion eine Kommunikation über das Netzwerk einzuleiten. Falls die Informationen nicht sofort angezeigt werden sollen, so steht ein Zwischenspeicher zur Verfügung, der die digitalen Informationen zwischenspeichert. Die so gespeicherten Informationen können zu einem späteren Zeitpunkt interpretiert und ggf. angezeigt werden oder auf einen PC übertragen werden, z. B. durch eine Email, um Sie dort auszuwerten.

In einer vorteilhaften Ausführungsform handelt es sich bei dem Anzeigegerät um ein bekanntes Handy oder einen bekannten Handheld (PDA), deren Funktionalität durch entsprechende Module oder Treiber, die vorzugsweise in Software realisiert sind, angepasst wurde. Viele dieser Geräte weisen bereits Infrarotschnittstellen auf, die zum Lesen und Empfangen eingesetzt werden können. Diese Geräte sind um eine RFID-Schnittstelle zu erweitern.

Sollten zwei übereinstimmende Informationen vorhanden sein, so wird ein entsprechender Hinweis gegeben. Diese Informationen werden in Form von Browser-interpretierbaren Informationen gesendet, wie WAP, URL, XML, html, xhtml, Java oder Java-Script. Die Verwendung eines entsprechenden Sendemoduls setzt dies voraus.

So wird ein Produkt, das von Originalherstellern mit smart tag versehen ist, an den Handel geliefert. Der tag enthält Angaben zu Hersteller, Preis, Finanzierungsraten, Seriennummer, etc. und wird im Geschäft ausgelegt.

Die tag-Angaben beziehen sich auf das spezifische Produkt und sind so individuell wie ein Fingerprint("item-level data").

Diese tag-gespeicherten Daten sind auch im Warenwirtschaftssystem (ERP) des Händlers hinterlegt.

Werden die Daten vom tag über eine am Endgerät integrierte Reader-Funktion auf das mobile Endgerät übertragen, entscheidet der User (Konsument), ob er diese Informationen mobil speichert, auf den Home PC überträgt, eine Transaktion auslöst oder eine weitere Kommunikation über das Netzwerk anbahnen möchte.

All diese Applikationen werden über eine Software auf dem Handy unterstützt und mittels eines "front end portals" mit Menüführung auf dem Display sichtbar und aktivierbar.

Im konkreten Fall der commerce-Transaktion ist der Vorgang folgender:

Der Konsument steuert das zu kaufende Produkt an und löst eine Buchung aus, indem ein Trustcenter (Telekom) die relevanten Daten wie Produkt-ID, ggfs. Händler-ID, Preis, Referenzdaten des Mobilkunden empfängt und bearbeitet. Es kann jedoch auch möglich sein, dass nur anhand der ID die benötigten Daten aus einer zentralen Datenbank abgefragt werden, da eine eindeutige Zuordnung möglich ist.

Der Händler erhält umgehend eine automatische elektronische Benachrichtigung, dass das individuelle Produkt gekauft wurde; die relevanten Buchungen im ERP-System werden automatisch vorgenommen.

Die Buchungssumme wird z.B. über die Telefonrechnung des Konsumenten eingezogen und an den Händler abgeführt.
Für den Fall von Rückfragen, Beschwerden und Beratungsbedarf kann der Konsument das Trust Center telefonisch erreichen.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

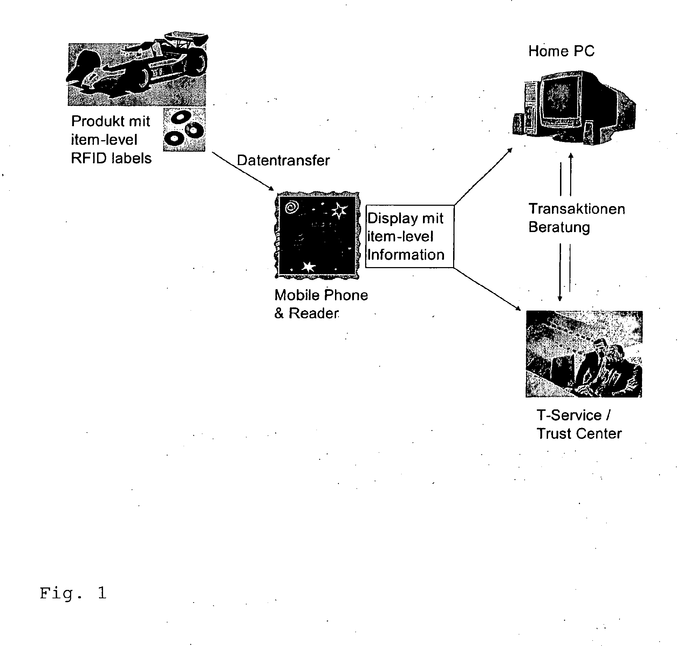

- Fig. 1: eine schematische Anordnung eines RFID-Trägers, mit einem passiven RFID-Sender und einem Anzeigegerät, das eine Verbindung zum Internet hat, um Informationen von einem Trustcenter zu erhalten;

Die Informationen werden in einem geringen Umkreis ausgestrahlt. Ein Anzeigegerät weist ein Display auf, durch das die Menü-Informationen dargestellt werden können. Weiterhin ist ein Empfangsmodul Bestandteil des Anzeigegeräts. Mithilfe dieses Empfangsmoduls werden die Informationen vom RFID-Label empfangen. Ein weiteres Funkmodul dient dazu, eine Verbindung zum Internet oder zum Trustcenter herzustellen, um ggf. weitere benötigte Informationen zu laden bzw. an den privaten PC zu übermitteln.

## Patentansprüche

1. Verfahren zur Bereitstellung von RFID-Informationen auf einem mobilen Kommunikationsgerät, das mindestens eine Netzwerkschnittstelle aufweist, wobei das mobile Kommunikationsgerät weiterhin eine RFID-Lesevorrichtung aufweist, **dadurch gekennzeichnet, dass** anhand der RFID-Informationen durch eine benutzerfreundliche Menüführung weitere Informationen über die Netzwerkschnittstelle angefordert und/oder gesendet werden, wobei die Menüführung dynamisch durch den Inhalt der RFID-Informationen vorgegeben wird.

2. Verfahren nach dem vorhergehenden Anspruch, **dadurch gekennzeichnet, dass** eine Telefonnummer und/oder ein Verweis zu einer Telefonnummer im RFID-Label abgelegt ist, die eine Telefonsprachverbindung über die Auswahl eines Menüs erlaubt, und/oder indem das Auslösen einer SMS, eines Anrufes, eines Rückrufes, einer Transaktion, des Anforderns weiterer digitaler Unterlagen, und/oder das Auslösen einer Übermitteln von Informationen an einen Email-Account über das Menü gestartet werden kann.

3. Verfahren nach einem oder mehreren der vorhergehenden Ansprüche, **dadurch gekennzeichnet, dass** Web-Browser-interpretierbare Informationen in Form von interpretierbaren Daten, wie html, XML, Javascript abgelegt sind, die für den Aufbau des Menüs und/oder für die Verwendung von Verweisen zuständig sind, die über die Netzwerkschnittstelle abrufbar sind.

4. Verfahren nach einem oder mehreren der vorhergehenden Ansprüche, **dadurch gekennzeichnet, dass** auf der Basis der Information des RFID mit einem Trustcenter kommuniziert wird, um die Echtheit des Produktes zu überprüfen.

5. Verfahren nach einem oder mehreren der vorhergehenden Ansprüche, **dadurch gekennzeichnet, dass** auf der Basis der Information des RFID eine Transaktion ausgelöst wird, wobei die eindeutige Kennung des Gegenstandes eine Bezahlung ermöglicht, über ein Truscenter und dem Geschäft in dem der Artikel lagert durchgeführt wird, wobei der Trustcenter dem Anbieter den Abschluss der Transaktion elektronisch mitteilt, insbesondere über ein SMS und/oder eine Email.

6. RFID-Informationsträger mit einem Bereich, in dem digital lesbare Informationen abgelegt sind, **gekennzeichnet durch** Informationen, die eine Menüdarstellung auf einem mobilen Endgerät erlauben, aufgrund derer **durch** einfache Cursor-Auswahl eine Interaktion gestartet werden kann, die zu einer Kommunikation über das Telefonnetz und oder Datennetz führt, wie das Auslösen einer SMS, eines Anrufes, eines Rückrufes, einer Transaktion, des Anforderns weiterer digitaler Unterlagen, das Auslösen einer Übermitteln von Informationen an einen Email-Account.

7. RFID-Informationsträger nach einem oder mehreren der vorhergehenden Informationsträgeransprüche, **dadurch gekennzeichnet, dass** die Web-Browser-interpretierbare Information eine URL ist, die vom Anzeigegerät geladen wird, um dann im Internet die entsprechende Seite zu bestimmen und zu laden, um weitere Detailinformationen darzustellen.

8. RFID-Informationsträger nach einem oder mehreren der vorhergehenden Informationsträgeransprüche, **dadurch gekennzeichnet, dass** die Web-Browser-interpretierbaren Informationen maschinenlesbare optische Codierungen sind.

9. Mobiles und vorzugsweise handgroßes Anzeigegerät mit einem Display, mit einem Speicherbereich, mit einer Bearbeitungseinheit, die vorzugsweise als Mikroprozessor ausgebildet ist, mit einem Funkmodul für einen Funkzugang zu einem Netzwerk, mit einer Leseeinheit für RFID-Informationen, wobei aufgrund der RFID-Informationen durch eine benutzerfreundliche Menüführung weitere Informationen über die Netzwerkschnittstelle angefordert werden, wobei die Menüführung dynamisch durch den Inhalt der RFID-Informationen vorgegeben wird, um dann eine Kommunikation über das drahtlose Netzwerk durchzuführen.

10. Anzeigegerät nach dem vorhergehenden Anzeigegeräteanspruch, wobei infolge der Interpretation der RFID-Informationen weitere Informationen aus dem Internet geladen werden, insbesondere dann, wenn ein Link in den Web-Browser-interpretierbaren Informationen eingebettet ist und/oder indem über das Menü das Auslösen einer SMS, eines Anrufes, eines Rückrufes, einer Transaktion, des Anforderns weiterer digitaler Unterlagen, und/oder das Auslösen einer Übermitteln von Informationen an einen Email-Account gestartet werden kann.

11. Anzeigegerät nach dem vorhergehenden Anzeigegerätanspruch, **dadurch gekennzeichnet, dass** ein Zwischenspeicher die Web-Browser-interpretierbaren Informationen zwischenspeichert, um sie zu einem späteren Zeitpunkt zu interpretieren und ggf. anzuzeigen.

12. Anzeigegerät nach einem oder mehreren der vorhergehenden Anzeigegerätansprüche, **dadurch gekennzeichnet, dass** eine Infrarotschnittstelle vorhanden ist, wobei ein entsprechender Treiber Web-Browser-interpretierbare Informationen erkennt und zur Interpretation weiterleitet.

13. Anzeigegerät nach einem oder mehreren der vorhergehenden Anzeigegerätansprüche, **dadurch gekennzeichnet, dass** ein Infrarotscanner vorhanden ist, der codierte Informationen auf dem Informationsträger lesen kann, wobei die Web-Browser-interpretierbaren Informationen als Strichcode codiert sein können.

14. Anzeigegerät nach einem oder mehreren der vorhergehenden Anzeigegerätansprüche, **gekennzeichnet durch** einen Funkempfänger, der **durch** einen Treiber gesteuert wird, um RFID-interpretierbare Informationen zu erkennen und zur Interpretation für das Menü aufbereitet.

15. Anzeigegerät nach einem oder mehreren der vorhergehenden Anzeigegerätansprüche, **dadurch gekennzeichnet, dass** es sich um ein bekanntes Handy oder einen bekannten Handheld handelt, deren Funktionalität durch entsprechende Module oder Treiber, die vorzugsweise in Software realisiert sind, angepasst wurde.
